# EUROPEAN PATENT SPECIFICATION

(11) **EP 3 954 194 B1**
(45) Date of publication and mention of the grant of the patent: **03.01.2024**
(21) Application number: 21187740.2
(22) Date of filing: 26.07.2021
(51) Int. Cl.: A01D 43/10, A01D 75/18, A01D 82/02

(54) **MECHANISM FOR SENSING VIBRATION IN CONDITIONER ROLLERS**
MECHANISMUS ZUR ERFASSUNG VON VIBRATIONEN IN KONDITIONIERWALZEN
MÉCANISME DE DÉTECTION DE VIBRATION DANS DES ROULEAUX CONDITIONNEURS

(30) Priority: 11.08.2020 US 202016947644
(43) Date of publication of application: 16.02.2022
(73) Proprietor: Deere & Company, Moline, IL 61265 (US)
(72) Inventor: LOVETT, BENJAMIN M, 68163 Mannheim (DE); ROTH, DARIN L, 68163 Mannheim (DE); EICK, BRONSON C, 68163 Mannheim (DE)
(74) Representative: Stein, Stefan

(56) References cited:
- EP-A1- 1 724 730
- EP-A1- 3 400 782
- WO-A1-2020/050958
- DE-A1-102012 223 768
- US-A- 4 720 962

## Description

### TECHNICAL FIELD

The disclosure generally relates to a crop conditioning system having mower conditioner rollers that are adjusted to be in close proximity to each other but not in contact with each other as they rotate.

### BACKGROUND

The present disclosure relates generally to agricultural mechanisms such as mower conditioners having a pair of rollers positioned close to each other such that they fracture, or condition, cut crop and vegetation passing therethrough. These rollers are intended to operate in very close proximity to each other. If they are positioned so close to each other that they make contact as they rotate, then the rollers and the frame carrying them will vibrate. When a mower conditioner is assembled, the rollers are set to have only a very small space between them. During assembly, the position of the rollers is adjusted so that they rotate without contacting each other but are very close to each other. After periods of use, the rollers can shift slightly after crops and other hard objects flow between them during operation. When the rollers shift into contact with each other, then the rollers, the frame carrying them, and sometimes the vehicle powering the rollers, experiences vibrations. The rollers must then be adjusted again. When the rollers shift too far away from each other after encounters with hard objects during periods of operation, the rollers must be adjusted back into close proximity for optimal crop conditioning operations. It would be desirable to improve the process of detecting when the rollers are positioned so close to each other that they contact each other and create undesirable vibration. It would also be desirable to improve the process of adjusting the position of the rollers with respect to each other. EP 3 400 782 A1 discloses a windrower with two rollers and a sensor system. DE 10 2012 223 768 A1 and EP 1 724 730 A1 disclose forage harvester with a vibration sensor. US 4,720,962 discloses an apparatus for picking up and conveying crop with detectors. WO 2020/050958 A1 discloses a self-propelled crop harvesting machine.

### SUMMARY

According to an aspect of the present disclosure a crop conditioning system according to the subject-matter of claim 1 is provided for sensing vibration in conditioner rollers. The crop conditioning system includes a frame. A first conditioner roller is rotatably attached to the frame for rotation about a respective central longitudinal axis of the first conditioner roller. A second conditioner roller is rotatably attached to the frame for rotation about a respective central longitudinal axis of the second conditioner roller. The first conditioner roller and the second conditioner roller are spaced apart to define a roll gap therebetween. An accelerometer is positioned to sense vibration in response to the first conditioner roller and the second conditioner roller contacting each other during rotation about their respective central longitudinal axis.

According to the subject-matter of claim 1 the crop conditioning system includes an arm. The arm is moveable relative to the frame and rotatably supports the first conditioner roller. Movement of the arm moves the first conditioner roller with respect to the second conditioner roller for adjusting the roll gap between the first conditioner roller and the second conditioner roller.

In one implementation of the disclosure, the accelerometer is attached to the arm. In another implementation of the disclosure, the accelerometer is attached to the frame adjacent and proximate to one of the first conditioner roller and the second conditioner roller.

A method of setting a roll gap between a first conditioner roller and a second conditioner roller of a crop conditioning system is also provided. The method includes rotating each of the first conditioner roller and the second conditioner roller about a respective central longitudinal axis of each. The first conditioner roller and the second conditioner roller are then moved toward each other to reduce the roll gap between the first conditioner roller and the second conditioner roller. Vibration caused by the first conditioner roller and the second conditioner roller contacting each other while rotating is sensed by an accelerometer. The first conditioner roller and the second conditioner roller are then moved away from each other, until the sensed vibration ceases, to define a zero or initial operating position for the first conditioner roller and the second conditioner roller.

In one implementation of the method of setting the roll gap between the first conditioner roller and the second conditioner roller, the accelerometer is permanently affixed to the crop conditioning system. In another implementation of the method, the accelerometer is temporarily affixed to the crop conditioning system, and then removed after the zero position has been set.

The above features and advantages and other features and advantages of the present teachings are readily apparent from the following detailed description of the best modes for carrying out the teachings when taken in connection with the accompanying drawings.

### BRIEF DESCRIPTION OF THE DRAWINGS

FIG. 1 shows a self-propelled mower conditioner having a head mounted on the front of the vehicle for engaging and cutting crop as the vehicle advances forward through a field
FIG. 2 is a perspective view of the head of Figure 1, showing in more detail the cutting apparatus that cuts vegetation, and first and second rotating rollers that receive cut vegetation and fracture the vegetation as it passes therebetween.
FIG. 3 is view of the head showing the first and second rollers, and the arm that pivotally supports the first roller on the right side of the frame.
FIG. 4 is close-up perspective view of the left side of the head, showing the frame, arm and bearing that support the first roller. The accelerometer is shown mounted on the arm.
FIG. 5 is a close-up perspective view of the right side of the head, showing the frame, arm and bearing that support the first roller. The accelerometer is shown mounted on the frame adjacent the arm.

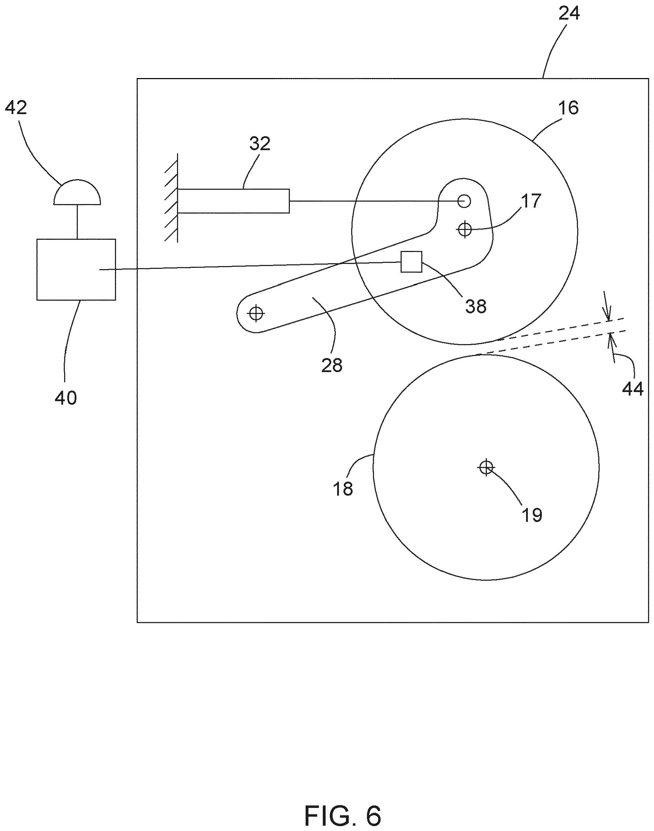

FIG. 6 is a schematic side view of the head showing the first and second rollers.

### DETAILED DESCRIPTION

Those having ordinary skill in the art will recognize that terms such as "above," "below," "upward," "downward," "top," "bottom," etc., are used descriptively for the figures, and do not represent limitations on the scope of the disclosure, as defined by the appended claims. Furthermore, the teachings may be described herein in terms of functional and/or logical block components and/or various processing steps. It should be realized that such block components may be comprised of any number of hardware, software, and/or firmware components configured to perform the specified functions.

Terms of degree, such as "generally", "substantially" or "approximately" are understood by those of ordinary skill to refer to reasonable ranges outside of a given value or orientation, for example, general tolerances or positional relationships associated with manufacturing, assembly, and use of the described embodiments.

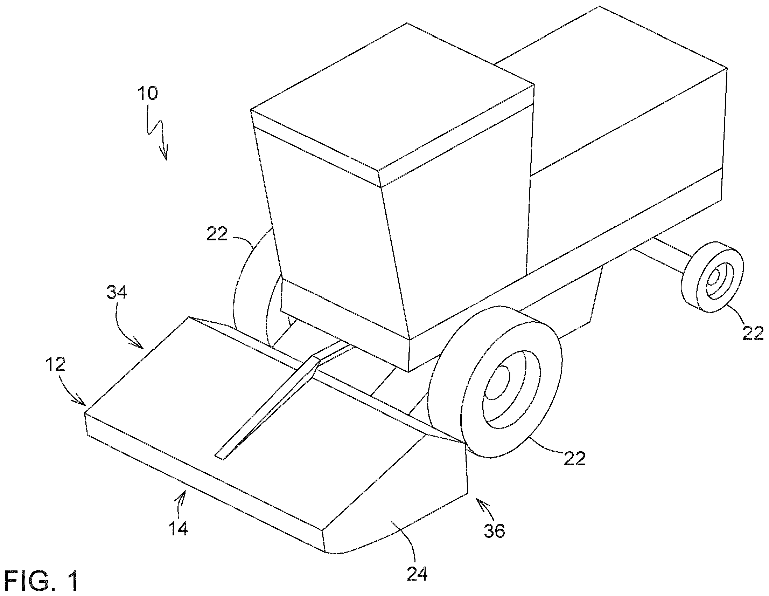

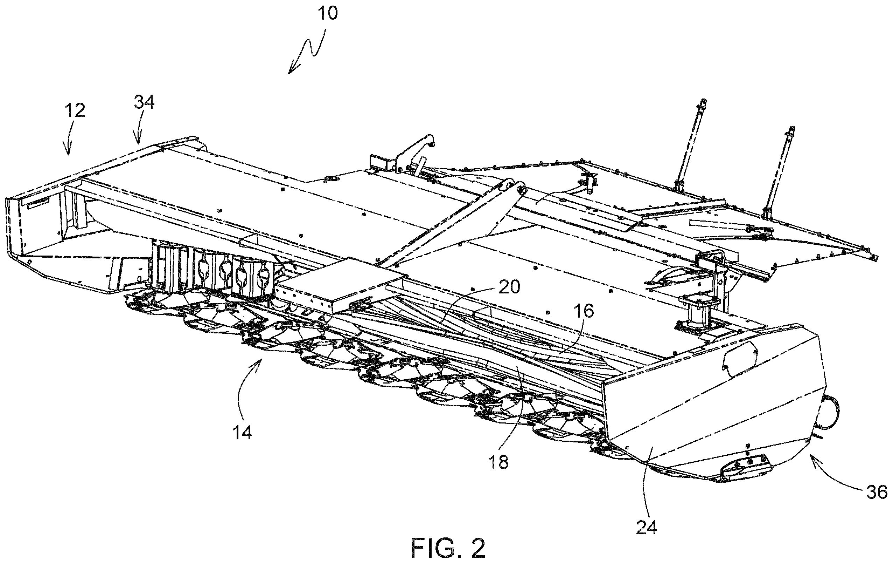

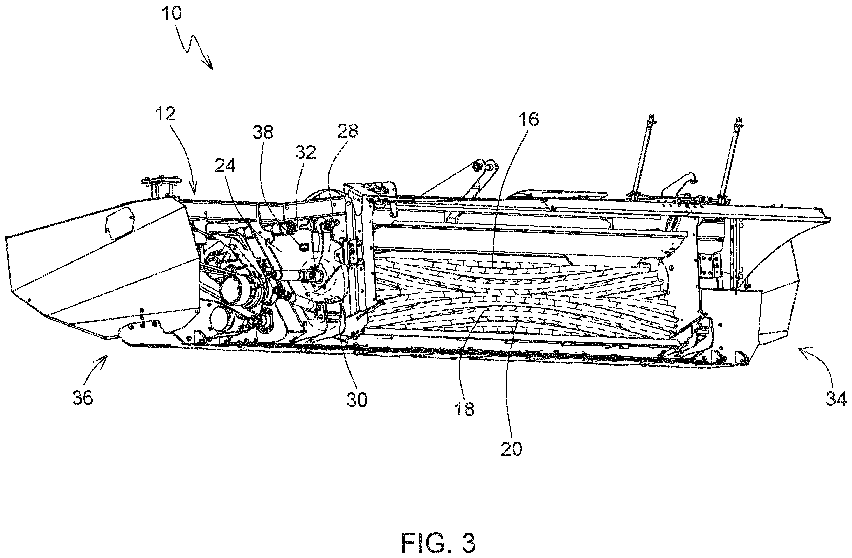

Referring to the Figures, wherein like numerals indicate like parts throughout the several views, at least one example embodiment of the subject matter of this disclosure is understood by referring to FIGS. 1 through 5 of the drawings.

As seen in FIG. 1, the present disclosure shows a mower conditioner 10. The mower conditioner 10 includes a forward portion or head 12 that engages vegetation such as grass as the mower conditioner 10 moves forward in a field during operation. The mower conditioner 10 may be a self-propelled vehicle as shown, but the head 12 could also be pulled or otherwise propelled through the field by a tractor. A cutting or mowing apparatus 14 is provided at the forward portion 12 of the mower conditioner 10 for cutting the vegetation encountered during forward operation. The cut vegetation travels rearwardly within the mower conditioner 10 until it encounters a first conditioner roller 16 and a second conditioner roller 18. The rollers 16, 18 extend transverse to the direction of travel, and are arranged in a generally spaced parallel relationship relative to each. The first roller 16 and the second roller 18 are spaced apart from each other to define a roll gap 44 therebetween.

The first and second rollers 16, 18 are driven by the vehicle engine to rotate in opposite directions to each other. The first roller 16 rotates about a respective central longitudinal axis 17 of the first roller 16. The second roller 18 rotates about a respective central longitudinal axis 19 of the second roller 18. The first and second rollers 16, 18 are positioned in close proximity to each other to define the roll gap 44 therebetween, such that the cut vegetation is fractured, broken, severed, or crushed as it passes through the roll gap 44 between the first and second rollers 16, 18. The conditioned crop is then discharged out the rear of the mower conditioner 10. Other mechanisms can be provided within the mower conditioner 10 for conditioning the cut crop, or for directing the cut crop within the mower conditioner 10. The rollers 16, 18 can have any one of a variety of different shapes formed in an outer circumferential surface of each to engage the cut crop and fracture, break, sever or crush the cut crop. The rollers 16, 18 shown in Figure 1 include curved shapes 20 that engage the cut crop.

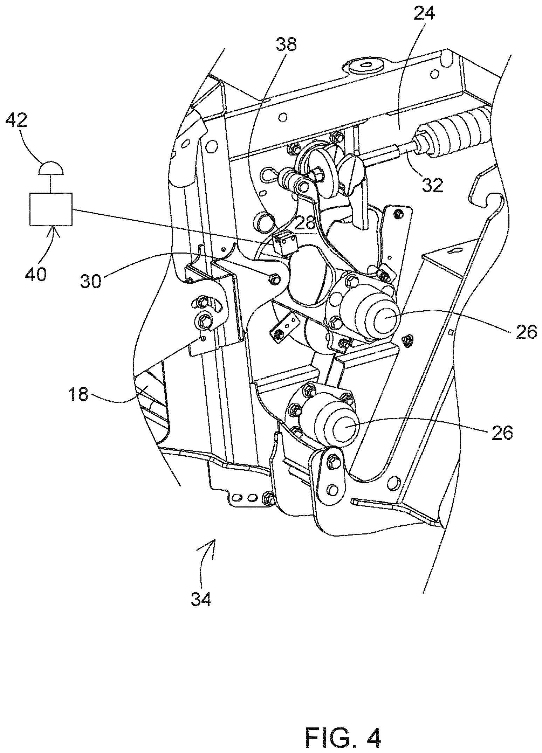

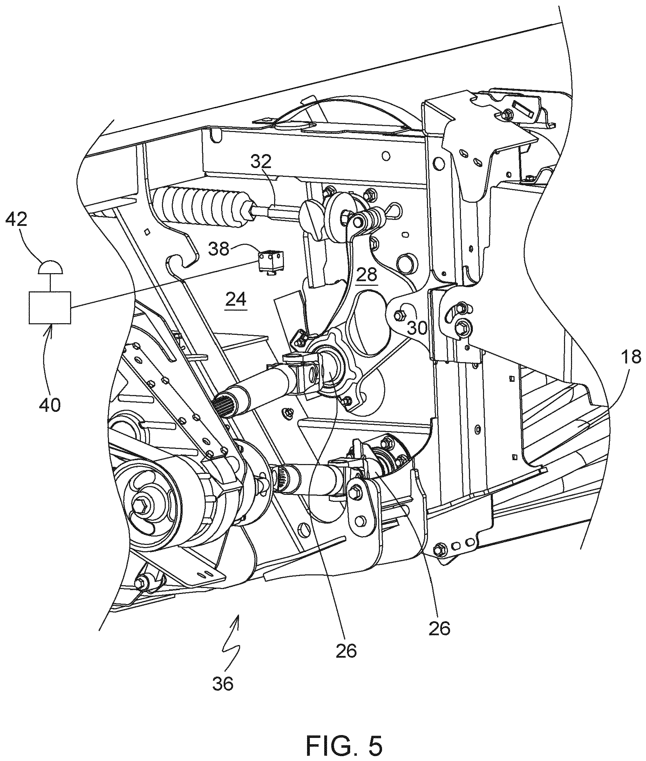

The mower conditioner 10 may include ground engaging wheels 22 or tracks that support the mechanism above the ground. A frame 24 within the head 12 may be supported by the wheels 22. Various components of the head 12 may be carried by the frame 24. The frame 24 rotatably supports the first and second rollers 16, 18. Bearings 26 can be provided that allow the rollers 16, 18 to rotate. An arm 28 is pivotably carried by the frame 24 by connection 30. The arm 28 as shown is adapted to operatively carry the first roller 16. A linkage 32 may extend between the frame 24 the arm 28. As the linkage 32 is lengthened or shortened, the arm 28 may pivot about the connection 30 with respect to the frame 24. As the arm 28 pivots with respect to the frame 24, the arm 28 may shift the first roller 16 toward or away from the second roller 18. The arm 28 may be adjusted to alter the position of the first roller 16 with respect to the second roller 18. An arm 28, connection 30 and linkage 32 may be provided on both the right side 34 and left side 36 as viewed by an operator riding in the vehicle. This allows for fine adjustment of the position of the first roller 16 with respect to the second roller 18. The arm 28, connection 30 and linkage 32 on the right side 34 is shown in Figure 5, and the arm 28, connection 30 and linkage 32 on the left side 36 is shown in Figure 4. The arm 28 as shown may pivot to move the first roller, but an arm that shifts linearly may also be provided. It is desirable to position the first roller 16 in close proximity to the second roller 18 so that cut vegetation is conditioned during operation, but not so close that the first and second rollers 16, 18 contact each other as they rotate during operation.

During manufacture of the mower conditioner 10, the frame 24, arm 28, linkage 32 and rollers 16, 18 are assembled. The linkages 32 are adjusted such that the arms 28 move the first and second rollers 16,18 into close proximity to each other. An accelerometer 38 may be positioned on the arm 28, as shown in FIG. 4. The first and second rollers 16, 18 can be rotated and moved into close proximity to each other. When the rollers 16, 18 contact each other, the assembly will vibrate. The accelerometer 38 is positioned to sense the vibrations in response to the first roller 16 and the second roller 18 contacting each other during rotation about their respective central longitudinal axis 17, 19. The accelerometer 38 may signal to an assembler that the rollers 16, 18 are in contact with each other. The arm 28 may then be adjusted such that the rollers 16, 18 are moved away from each other slightly. When the accelerometer 38 no longer senses significant vibration of the contacting rollers 16, 18, the operator can stop moving the first roller 16 away from the second roller 18. The first and second rollers 16, 18 can thereby be properly adjusted for good operation in the field.

The accelerometer 38 may include, but is not limited to, a device that is capable of detecting or sensing acceleration, i.e., vibration, of the first roller 16, the second roller 18, or a component connected thereto and directly affected by acceleration and/or vibration of one or both of the first roller or the second roller 18. Because there exist many components of the crop conditioning system that may cause vibration, it is desirable to position the accelerometer 38 near or proximate the first roller 16 and/or the second roller 18, to detect vibration caused by the acceleration resulting from the first roller 16 and the second roller 18 contacting each other while they rotate about their respective axis.

During periods of use in the field, materials such as cut vegetation are fed through the first and second rollers 16, 18. The rollers 16, 18 can also encounter stiff or hard objects such as rigid vegetation, wood chips, rocks or pieces of metal. These objects can cause the first and second rollers 16, 18 to deform or move with respect to each other. The rollers 16, 18 can be shifted away from each other or can be shifted toward each other. Movement or deformation of the rollers 16, 18 can require the rollers 16, 18 to be adjusted after periods of extended use. An accelerometer 38 may be placed on the arm 28, or on the frame 24 adjacent the arm 28, when the rollers 16, 18 are adjusted after long use. An operator adjusting the rollers 16, 18 can move the first roller 16 toward the second roller 18 until the accelerometer 38 senses vibrations. The operator can then move the first roller 16 away from the second roller 18 until the accelerometer 38 stops sensing the vibrations due to roller contact.

The accelerometer 38 can be mounted to the arm 28 or the frame 24 to sense vibration due to roller contact. The accelerometer 38 can be detached after adjustment of the rollers 16, 18, or can remain mounted in place during mower conditioner operation. If the accelerometer 38 is left in place during operations, the accelerometer 38 may be operatively coupled to a roller controller 40 for providing input regarding detection of vibration from the first and second rollers contacting each other.

The roller controller 40 may be disposed in communication with the accelerometer 38 and operable to receive a signal from the accelerometer 38 related to sensed vibration caused by the first and second rollers 16, 18 contacting each other during rotation. The roller controller 40 may alternatively be referred to as a computer, a computing device, a controller, a control module, a control unit, etc. The roller controller 40 includes a processor and a memory having instructions stored thereon. The processor is operable to execute the instructions to perform the various tasks described herein, such as notify the operator of vibration caused by the first and second rollers 16, 18 contacting each other.

The roller controller 40 may further include an indicator 42. The indicator 42 is operable to generate a notification in response to the signal from the accelerometer 38 in order to notify the operator of vibration caused by the first and second rollers 16, 18 contacting each other during rotation. The notification may include, but is not limited to, an audio or visual signal, such as a warning light or sound. As such, the indicator 42 may include, but is not limited to, a warning lamp, a speaker, a visual display, etc.

The present disclosure references use on a mower conditioner, but can be utilized with any crop conditioning device using rotating rollers. For example, the present disclosure could also be utilized on a self-propelled forage harvester utilizing rotating rollers, or on a mower conditioner drawn or pushed by a tractor.

A method of setting the roll gap between the first conditioner roller 16 and the second conditioner roller 18 of the crop conditioning system includes rotating each of the first roller 16 and the second roller 18 about their respective central longitudinal axis 17, 19.

The first roller 16 and the second roller 18 are then moved toward each other to reduce the roll gap 44 between the first roller 16 and the second roller 18. The first roller 16 and the second roller 18 may be moved toward each other in a suitable manner, such as but not limited to actuating the linkage 32 to move the arm 28, which in turn adjusts the position of the first roller 16 relative to the second roller 18. It should be appreciated that the roll gap 44 may be reduced in size in some other manner not described herein.

Eventually, as the first roller 16 and the second roller 18 are moved toward each other, while they rotate about their respective central longitudinal axis 17, 19, the first roller 16 and the second droller 18 will contact each other. This contact while rotating will induce movement causing vibration in the first roller 16 and/or the second roller 18. This vibration may then be sensed by the accelerometer 38.

The accelerometer 38 may send a signal to the roller controller 40 indicating the sensed vibration. The roller controller 40 may then generate a notification with the indicator 42 in response to the sensed vibration caused by the first roller 16 and the second roller 18 contacting each other while rotating. The notification alerts an operator of the sensed vibration, thereby indicating that the first roller 16 and the second droller 18 are contacting each other during rotation.

Once the first roller 16 and the second roller 18 have been brought into contact during rotation, indicated by the vibration sensed by the accelerometer 38, the first roller 16 and the second roller 18 may then be moved away from each other, until the sensed vibration ceases. Once the first roller 16 and the second roller 18 have been moved away to a position in which the accelerometer 38 no longer senses vibration caused by the first roller 16 and the second roller 18 contacting each other during rotation, the position of the first roller 16 and the second roller 18 may be fixed to define a zero position for the first roller 16 and the second roller 18. The zero position may be considered an initial position or default position.

As noted above, the accelerometer 38 may be permanently affixed to the crop conditioning system, or may be temporarily affixed to the crop conditioning system for setting the roll gap between the first and second rollers 16, 18, and then removed. It should be appreciated that for temporary installation, the accelerometer 38 is temporarily mounted to a component of the crop conditioning system in a position capable of sensing vibration induced by the first roller 16 and the second roller 18 contacting each other while rotating. Upon the zero position being set, the accelerometer 38 may then be removed from the crop conditioning system.

As used herein, "e.g." is utilized to non-exhaustively list examples, and carries the same meaning as alternative illustrative phrases such as "including," "including, but not limited to," and "including without limitation." As used herein, unless otherwise limited or modified, lists with elements that are separated by conjunctive terms (e.g., "and") and that are also preceded by the phrase "one or more of," "at least one of," "at least," or a like phrase, indicate configurations or arrangements that potentially include individual elements of the list, or any combination thereof. For example, "at least one of A, B, and C" and "one or more of A, B, and C" each indicate the possibility of only A, only B, only C, or any combination of two or more of A, B, and C (A and B; A and C; B and C; or A, B, and C). As used herein, the singular forms "a", "an" and "the" are intended to include the plural forms as well, unless the context clearly indicates otherwise. Further, "comprises," "includes," and like phrases are intended to specify the presence of stated features, steps, operations, elements, and/or components, but do not preclude the presence or addition of one or more other features, steps, operations, elements, components, and/or groups thereof.

While the present disclosure has been illustrated and described in detail in the drawings and foregoing description, such illustration and description is not restrictive in character, it being understood that illustrative embodiment(s) have been shown and described and that all changes and modifications that come within the scope of the appended claims are desired to be protected. Those of ordinary skill in the art may devise their own implementations that incorporate one or more of the features of the present disclosure and fall within the scope of the appended claims.

The detailed description and the drawings or figures are supportive and descriptive of the disclosure, but the scope of the disclosure is defined solely by the claims. While some of the best modes and other embodiments for carrying out the claimed teachings have been described in detail, various alternative designs and embodiments exist for practicing the disclosure defined in the appended claims.

## Claims

1. A crop conditioning system comprising:
a frame (24);
a first conditioner roller (16) rotatably attached to the frame (24) for rotation about a respective central longitudinal axis (17) of the first conditioner roller (16);
a second conditioner roller (18) rotatably attached to the frame (24) for rotation about a respective central longitudinal axis (19) of the second conditioner roller (18), with the first conditioner roller (16) and the second conditioner roller (18) spaced apart to define a roll gap (44) therebetween; **characterized in that** the crop conditioning system further comprises:
an accelerometer (38) positioned to sense vibration in response to the first conditioner roller (16) and the second conditioner roller (18) contacting each other during rotation about their respective central longitudinal axis (17, 19), and
an arm (28) moveable relative to the frame (24) and rotatably supporting the first conditioner roller (16), whereby movement of the arm (28) moves the first conditioner roller (16) with respect to the second conditioner roller (18) for adjusting the roll gap (44) between the first conditioner roller (16) and the second conditioner roller (18).

2. The crop conditioning system set forth in claim 1, wherein the accelerometer (38) is mounted to the arm (28).

3. The crop conditioning system according to at least one of the claims 1 to 2, wherein the accelerometer (38) is removably mounted to the arm (28).

4. The crop conditioning system according to claim 1, wherein the accelerometer (38) is mounted to the frame (24) proximate the arm (28).

5. The crop conditioning system according to one of claims 1 and 4, J wherein the accelerometer (38) is removably mounted to the frame (24).

6. The crop conditioning system according to at least one of the claims 1 to 5, wherein the rollers are carried by a mower conditioner (10).

7. The crop conditioning system set according to at least one of the claims 1 to 6, further comprising a roller controller (40) disposed in communication with the accelerometer (38) and operable to receive a signal from the accelerometer (38) related to sensed vibration.

8. The crop conditioning system according to claim 7, wherein the roller controller (40) includes an indicator operable to generate a notification in response to the signal from the accelerometer (38).

9. A method of setting a roll gap (44) between a first conditioner roller (16) and a second conditioner roller (18) of a crop conditioning system, the method comprising:
rotating each of the first conditioner roller (16) and the second conditioner roller (18) about a respective central longitudinal axis (17, 19) of each;
moving the first conditioner roller (16) and the second conditioner roller (18) toward each other to reduce the roll gap (44) between the first conditioner roller (16) and the second conditioner roller (18); **characterized by**
sensing vibration with an accelerometer (38) caused by the first conditioner roller (16) and the second conditioner roller (18) contacting each other while rotating; and
moving the first conditioner roller (16) and the second conditioner roller (18) away from each other, until the sensed vibration ceases, to define a zero position for the first conditioner roller (16) and the second conditioner roller (18).

10. The method set forth in claim 9, further comprising temporarily mounting the accelerometer (38) to a component of the crop conditioning system in a position capable of sensing vibration induced by the first conditioner roller (16) and the second conditioner roller (18) contacting each other while rotating.

11. The method set forth in claim 9 or 10, further comprising removing the accelerometer (38) from the crop conditioning system after the zero position for the first conditioner roller (16) and the second conditioner roller (18) is defined.

12. The method according to at least one of the claims 9 to 11, further comprising generating a notification with an indicator in response to the sensed vibration caused by the first conditioner roller (16) and the second conditioner roller (18) contacting each other while rotating.

## Patentansprüche

1. Erntegutkonditioniersystem, umfassend:
einen Rahmen (24);
eine erste Konditionierwalze (16), die drehbar an dem Rahmen (24) zur Drehung um eine betreffende mittige Längsachse (17) der ersten Konditionierwalze (16) angebracht ist;
eine zweite Konditionierwalze (18), die drehbar an dem Rahmen (24) zur Drehung um eine betreffende mittige Längsachse (19) der zweiten Konditionierwalze (18) angebracht ist, wobei die erste Konditionierwalze (16) und die zweite Konditionierwalze (18) voneinander beabstandet sind, um einen Walzenspalt (44) dazwischen zu definieren; **dadurch gekennzeichnet, dass** das Erntegutkonditioniersystem ferner umfasst:
einen Beschleunigungsmesser (38), der dazu positioniert ist, Vibration als Reaktion darauf zu erfassen, dass die erste Konditionierwalze (16) und die zweite Konditionierwalze (18) einander während der Drehung um ihre jeweilige mittige Längsachse (17, 19) berühren, und einen Arm (28), der relativ zu dem Rahmen (24) bewegbar ist und die erste Konditionierwalze (16) drehbar trägt, wobei die Bewegung des Arms (28) die erste Konditionierwalze (16) in Bezug auf die zweite Konditionierwalze (18) bewegt, um den Walzenspalt (44) zwischen der ersten Konditionierwalze (16) und der zweiten Konditionierwalze (18) einzustellen.

2. Erntegutkonditioniersystem gemäß Anspruch 1, wobei der Beschleunigungsmesser (38) an dem Arm (28) angebracht ist.

3. Erntegutkonditioniersystem gemäß mindestens einem der Ansprüche 1 bis 2, wobei der Beschleunigungsmesser (38) abnehmbar an dem Arm (28) angebracht ist.

4. Erntegutkonditioniersystem gemäß Anspruch 1, wobei der Beschleunigungsmesser (38) an dem Rahmen (24) in der Nähe des Arms (28) angebracht ist.

5. Erntegutkonditioniersystem gemäß einem der Ansprüche 1 und 4, wobei der Beschleunigungsmesser (38) abnehmbar an dem Rahmen (24) angebracht ist.

6. Erntegutkonditioniersystem gemäß mindestens einem der Ansprüche 1 bis 5, wobei die Walzen durch einen Mähwerkskonditionierer (10) getragen werden.

7. Erntegutkonditioniersystem gemäß mindestens einem der Ansprüche 1 bis 6, ferner umfassend eine Walzensteuervorrichtung (40), die mit dem Beschleunigungsmesser (38) kommunizierend angeordnet ist und dazu betreibbar ist, ein Signal aus dem Beschleunigungsmesser (38) zu empfangen, das sich auf die erfasste Vibration bezieht.

8. Erntegutkonditioniersystem gemäß Anspruch 7, wobei die Walzensteuervorrichtung (40) eine Anzeige enthält, die dazu funktionsfähig ist, als Reaktion auf das Signal des Beschleunigungsmessers (38) eine Benachrichtigung zu erzeugen.

9. Verfahren zum Einstellen eines Walzenspalts (44) zwischen einer ersten Konditionierwalze (16) und einer zweiten Konditionierwalze (18) eines Erntegutkonditioniersystems, wobei das Verfahren umfasst:
Drehen jeder der ersten Konditionierwalze (16) und der zweiten Konditionierwalze (18) um ihre jeweilige mittige Längsachse (17, 19);
Bewegen der ersten Konditionierwalze (16) und der zweiten Konditionierwalze (18) aufeinander zu, um den Walzenspalt (44) zwischen der ersten Konditionierwalze (16) und der zweiten Konditionierwalze (18) zu verringern;
**gekennzeichnet durch**
Erfassen von Vibration mit einem Beschleunigungsmesser (38), die durch die erste Konditionierwalze (16) und die zweite Konditionierwalze (18), die sich während der Drehung berühren, verursacht wird;
und
Bewegen der ersten Konditionierwalze (16) und der zweiten Konditionierwalze (18) voneinander weg, bis die erfasste Vibration aufhört, um eine Nullposition für die erste Konditionierwalze (16) und die zweite Konditionierwalze (18) zu definieren.

10. Verfahren gemäß Anspruch 9, ferner umfassend vorübergehendes Anbringen des Beschleunigungsmessers (38) an einer Komponente des Erntegutkonditioniersystems in einer Position, die in der Lage ist, Vibrationen zu erfassen, die durch die erste Konditionierwalze (16) und die zweite Konditionierwalze (18), die sich während der Drehung berühren, verursacht werden.

11. Verfahren gemäß Anspruch 9 oder 10, ferner umfassend Entfernen des Beschleunigungsmessers (38) aus dem Erntegutkonditioniersystem, nachdem die Nullposition für die erste Konditionierwalze (16) und die zweite Konditionierwalze (18) definiert ist.

12. Verfahren gemäß mindestens einem der Ansprüche 9 bis 11, ferner umfassend Erzeugen einer Benachrichtigung mit einer Anzeige als Reaktion auf die erfasste Vibration, die durch die erste Konditionierwalze (16) und die zweite Konditionierwalze (18), die sich während der Drehung berühren, verursacht wird.

## Revendications

1. Système de conditionnement de cultures, comprenant :
un châssis (24) ;
un premier rouleau conditionneur (16) fixé en rotation au châssis (24) pour une rotation autour d'un axe central longitudinal respectif (17) du premier rouleau conditionneur (16) ;
un second rouleau conditionneur (18) fixé en rotation au châssis (24) pour une rotation autour d'un axe central longitudinal respectif (19) du second rouleau conditionneur (18), le premier rouleau conditionneur (16) et le second rouleau conditionneur (18) étant espacés pour définir un écartement (44) entre eux ; **caractérisé en ce que** le système de conditionnement de cultures comprend en outre
un accéléromètre (38) positionné pour détecter des vibrations en réponse au contact entre le premier rouleau conditionneur (16) et le second rouleau conditionneur (18) pendant la rotation autour de leur axe central longitudinal respectif (17, 19), et
un bras (28) mobile par rapport au châssis (24) et supportant en rotation le premier rouleau conditionneur (16), grâce à quoi le déplacement du bras (28) déplace le premier rouleau conditionneur (16) par rapport au second rouleau conditionneur (18) pour régler l'écartement (44) entre le premier rouleau conditionneur (16) et le second rouleau conditionneur (18).

2. Système de conditionnement de cultures selon la revendication 1, dans lequel l'accéléromètre (38) est monté sur le bras (28).

3. Système de conditionnement de cultures selon au moins l'une des revendications 1 et 2, dans lequel l'accéléromètre (38) est monté amovible sur le bras (28).

4. Système de conditionnement de cultures selon la revendication 1, dans lequel l'accéléromètre (38) est monté sur le châssis (24) à proximité du bras (28).

5. Système de conditionnement de cultures selon l'une des revendications 1 et 4, dans lequel l'accéléromètre (38) est monté amovible sur le châssis (24).

6. Système de conditionnement de cultures selon au moins l'une des revendications 1 à 5, dans lequel les rouleaux sont portés par une faucheuse conditionneuse (10) .

7. Système de conditionnement de cultures selon au moins l'une des revendications 1 à 6, comprenant en outre un dispositif de commande de rouleau (40) disposé en communication avec l'accéléromètre (38) et pouvant fonctionner pour recevoir un signal depuis l'accéléromètre (38) relatif aux vibrations détectées.

8. Système de conditionnement de cultures selon la revendication 7, dans lequel le dispositif de commande de rouleau (40) comprend un indicateur pouvant fonctionner pour générer une notification en réponse au signal provenant de l'accéléromètre (38).

9. Procédé de réglage d'un écartement (44) entre un premier rouleau conditionneur (16) et un second rouleau conditionneur (18) d'un système de conditionnement de cultures, le procédé comprenant :
la rotation de chacun du premier rouleau conditionneur (16) et du second rouleau conditionneur (18) autour d'un axe central longitudinal respectif (17, 19) de ceux-ci ;
le déplacement du premier rouleau conditionneur (16) et du second rouleau conditionneur (18) en direction l'un de l'autre pour réduire l'écartement (44) entre le premier rouleau conditionneur (16) et le second rouleau conditionneur (18) ; **caractérisé par**
la détection de vibrations par un accéléromètre (38) provoquées par la mise en contact du premier rouleau conditionneur (16) et du second rouleau conditionneur (18) l'un avec l'autre pendant leur rotation ;
et
l'éloignement du premier rouleau conditionneur (16) et du second rouleau conditionneur (18) l'un de l'autre, jusqu'à ce que les vibrations détectées cessent, pour définir une position zéro pour le premier rouleau conditionneur (16) et le second rouleau conditionneur (18) .

10. Procédé selon la revendication 9, comprenant en outre le montage temporaire de l'accéléromètre (38) sur un composant du système de conditionnement de cultures dans une position apte à détecter les vibrations induites par le premier rouleau conditionneur (16) et le second rouleau conditionneur (18) en contact l'un avec l'autre pendant leur rotation.

11. Procédé selon la revendication 9 ou 10, comprenant en outre le retrait de l'accéléromètre (38) du système de conditionnement de cultures une fois que la position zéro est définie pour le premier rouleau conditionneur (16) et le second rouleau conditionneur (18).

12. Procédé selon l'une quelconque des revendications 9 à 11, comprenant en outre la génération d'une notification par un indicateur en réponse aux vibrations détectées provoquées par la mise en contact du premier rouleau conditionneur (16) et du second rouleau conditionneur (18) l'un avec l'autre pendant leur rotation.
